# EUROPÄISCHE PATENTANMELDUNG

(11) **EP 1 408 395 A2**
(43) Veröffentlichungstag der Anmeldung: **14.04.2004**
(21) Anmeldenummer: 03020884.7
(22) Anmeldetag: 15.09.2003
(51) Int. Cl.: G06F 3/033

(54) **Verfahren zur automatischen Erkennung von Benutzerbefehlen auf einer als Touchscreen ausgebildeten Benutzeroberfläche**

(30) Priorität: 26.09.2002 DE 10244900
(71) Anmelder: SIEMENS AKTIENGESELLSCHAFT, 80333 München (DE)
(72) Erfinder: Günther, Erich, 91074 Herzogenaurach (DE)

(57) **Zusammenfassung**

Die Erfindung betrifft ein Verfahren zur automatischen Verarbeitung von Eingabebefehlen einer Computer-Anwenderstation mit einer als Touchscreen ausgebildeten Benutzeroberfläche, wobei eine vom Benutzer auf der Benutzeroberfläche eingegebene Druckinformation in Form mindestens einer geometrischen Figur erkannt und einem Eingabebefehl zugeordnet wird.

## Beschreibung

Die Erfindung betrifft ein Verfahren zur automatischen Erkennung von Benutzerbefehlen auf einer als Touchscreen ausgebildeten Benutzeroberfläche mit den Merkmalen des Oberbegriffs des Patentanspruchs 1.

Der Erfindung liegt die Aufgabe zugrunde, ein besonders variables Verfahren zur Erkennung von Benutzerbefehlen bei Computer-Anwenderstationen mit als Touchscreen ausgebildeten Benutzeroberflächen anzubieten. Diese Aufgabe wird durch die Merkmale des Patentanspruchs 1 gelöst. Vorteilhafte Verfahrensvarianten werden in den Unteransprüchen 2 - 8 beschrieben.

Das erfindungsgemäße Verfahren zur Erkennung von einer Vielzahl von Eingabebefehlen auf einer als Touchscreen ausgebildeten Benutzeroberfläche ermöglicht die Eingabe einer erweiterten Anzahl von Eingabebefehlen auf der Benutzeroberfläche. Üblicherweise konnten auf einem Touchscreen vom Benutzer nur punktuelle Druckinformationen eingegeben und von der Computer-Anwenderstation erkannt werden. Zur Erweiterung der Eingabemöglichkeiten ermöglicht das erfindungsgemäße Verfahren auch eine (bei Bedarf abschaltbare) Erkennung von Eingabebefehlen, welche nicht punktförmigen Charakter haben, sondern geometrischen Figuren entsprechen (z.B. Linien oder Kurven). Die Computer-Anwenderstation kann dabei eine zunehmende Anzahl von geometrischen Figuren erkennen wodurch die Variabilität der Eingabebefehle weiter gesteigert wird.

Durch "Ziehen" einer derartigen Linie oder Kurve (mit entsprechender Druckbeaufschlagung) auf der Benutzeroberfläche eines Touchscreens kann der Benutzer nun Eingabebefehle realisieren, welche vormals nicht formuliert werden konnten.

Zur Eingabe stehen dem Benutzer somit neben der an sich bekannten Punkteingabe durch Drücken auf ein bestimmtes Bedienfeld der Benutzeroberfläche nun auch Linien- und Kurveneingaben zur Verfügung. So kann der Benutzer z.B. mit seinem Zeigefinger einen Kreis auf einer bestimmten Stelle der Benutzeroberfläche ziehen und hierdurch einen bestimmten Benutzereingabebefehl realisieren. Ferner können z.B. sich kreuzende Linie gezogen werden und eine Vielzahl von geometrischen Figuren auf die Benutzeroberfläche übertragen werden.

Das erfindungsgemäße Verfahren ist besonders vorteilhaft, wenn der "Touchscreen" als Vorrichtung zur Übermittlung von Eingabebefehlen anstelle einer an sich bekannten Hilfsvorrichtung, wie z.B. einem Mauselement, verwendet wird. Derartige Mauselemente besitzen üblicherweise mindestens zwei Tasten ("linke Maustaste" und "rechte Maustaste"), wodurch unterschiedliche jeweils der "linken Maustaste" und der "rechten Maustaste" zugeordnete Eingabebefehle realisiert werden können.

Bei als Touchscreen ausgebildeten Benutzeroberflächen können nun sämtliche über ein Mauselement eingebbare Eingabebefehle nach dem erfindungsgemäßen Verfahren auch über die Druckbeaufschlagung einer als Touchscreen ausgebildeten Benutzeroberfläche eingegeben werden. Damit wird der Bereich der Eingabebefehle eines Touchscreens deutlich erweitert.

Ferner können Touchscreens als Eingabeelemente auch für EDV-Programme der Computer-Anwenderstation verwendet werden, welche üblicherweise in ihrer Schnittstelle auf ein Mauselement mit einer "linken Maustaste" und einer "rechten Maustaste" eingerichtet sind. Eine Änderung der EDV-Programme ist somit nicht mehr erforderlich. Die EDV-Programme können sowohl zur Eingabe von Eingabebefehlen über Mauselemente als auch nach dem erfindungsgemäßen Verfahren über eine als Touchscreen ausgebildete Benutzeroberfläche verwendet werden.

Das erfindungsgemäße Verfahren kann z.B. bei der Maschinenbedienung durch einen Benutzer in einer Maschinenhalle verwendet werden. Es sind jedoch auch sämtliche andere Einsatzmöglichkeiten (z.B. im Bereich Geldautomat oder im Konsumentenbereich) möglich.

Vorteilhafterweise werden die vom Benutzer auf der Benutzeroberfläche eingegebenen geometrischen Informationen (Linien, Kurven etc.) auch für den Benutzer durch Anzeige entsprechender "Linien" und "Kurven" auf der Benutzeroberfläche visualisiert. Hierdurch kann der Benutzer in einer Selbstkontrolle erkennen, welchen Eingabebefehl er gerade ausführt und kann feststellen, ob dieser Befehl ordnungsgemäß von ihm eingegeben wird. Andernfalls kann er den Vorgang abbrechen und gegebenenfalls wiederholen.

Das erfindungsgemäße Verfahren ist anhand eines Ausführungsbeispiels näher erläutert.

Eine Bedienoberfläche z.B. eines Geldautomaten, welche als Touchscreen ausgebildet ist, weist an sich bekannte Bedienfelder wie z.B. "Geld abheben", "Kontostand abfragen" und "Bestätigung" auf. Üblicherweise gibt der Benutzer punktuelle Druckinformationen auf den einzelnen Bedienfelder ab und kann somit entweder z.B. Geld abheben oder seinen Kontostand abrufen.

Zur Eingabe weiterer Informationen kann der Benutzer nun Eingabebefehle in Form von geometrischen Figuren ausführen, z.B. einen Kreuzbefehl ("Ziehen von zwei diagonal zueinander angebrachten Kreuzlinien") oder einen Kreisbefehl ("Ziehen eines Kreises, linksherum oder rechtsherum").

Bei Anwendung dieser geometrischen Befehle auf der Benutzeroberfläche kann somit z.B. nicht nur der Kontostand abgefragt werden, sondern z.B. durch Anwendung eines Kreisbefehls auf das Bedienfeld "Kontostandabfragen" kann ein weiteres Bedienfenster erscheinen und z.B. eine Abfrage der Kontostände von Unterkonten ermöglichen.

Insgesamt ermöglichen Bedienbefehle in form von geometrischen Figuren auch die Simulation eine angeschlossen Mauselements als Hilfseinrichtung zur Dateneingabe, wobei durch die beschriebenen geometrischen Befehle auch die Funktion der "rechten Maustaste" übernommen werden kann.

## Patentansprüche

1. Verfahren zur automatischen Verarbeitung von Eingabebefehlen einer Computer-Anwenderstation mit einer als Touchscreen ausgebildeten Benutzeroberfläche, wobei eine vom Benutzer auf der Benutzeroberfläche eingegebene Druckinformation in Form mindestens einer geometrischen Figur erkannt und einem Eingabebefehl zugeordnet wird.

2. Verfahren nach Anspruch 1, wobei die geometrische Figur mindestens eine Kurve aufweist.

3. Verfahren nach Anspruch 1 oder 2, wobei die wobei die geometrische Figur eine mindestens eine Linie aufweist.

4. Verfahren nach einem der vorhergehenden Ansprüche, wobei die Benutzeroberfläche eine Schnittstelle zur Computer-Anwenderstation aufweist, welche im wesentlichen identisch ist mit einer Schnittstelle zwischen einer Hilfsvorrichtung zur Dateneingabe durch ein Mauselement und einer Computer-Anwenderstation.

5. Verfahren nach Anspruch 4, wobei die erkannten Druckinformationen denjenigen Eingabebefehlen entsprechen, welche über die rechte Taste einer Mausvorrichtung als Hilfseinrichtung zur Dateneingabe ausgelöst werden können.

6. Verfahren nach einem der vorhergehenden Ansprüche, wobei die vom Benutzer auf der Benutzeroberfläche eingegebene Druckinformation auf der Benutzeroberfläche angezeigt wird.

7. Verfahren nach einem der vorhergehenden Ansprüche, wobei die Erkennung von Druckinformation in Form mindestens einer geometrischen Figur abschaltbar ist.

8. Verfahren nach einem der vorhergehenden Ansprüche, wobei die Anzahl der erkennbaren geometrischen Figuren einstellbar ist.
